# EUROPÄISCHE PATENTSCHRIFT

(11) **EP 2 711 314 B1**
(45) Veröffentlichungstag und Bekanntmachung des Hinweises auf die Patenterteilung: **04.05.2016**
(21) Anmeldenummer: 13185259.2
(22) Anmeldetag: 20.09.2013
(51) Int. Cl.: B67C 3/24, B65G 29/00, B65G 47/80, B67C 7/00

(54) **Verfahren und Vorrichtung zum Transportieren von mit Flüssigkeit gefüllten Behältern**
Method and device for transporting containers filled with fluid
Procédé et dispositif destinés au transport de récipients remplis de liquide

(30) Priorität: 21.09.2012 DE 102012108928
(43) Veröffentlichungstag der Anmeldung: 26.03.2014
(73) Patentinhaber: Krones AG, 93073 Neutraubling (DE)
(72) Erfinder: Meinzinger, Rupert, 93073 Neutraubling (DE)
(74) Vertreter: Nordmeyer, Philipp Werner

(56) Entgegenhaltungen:
- WO-A1-2011/007370
- US-A- 4 338 765
- US-A1- 2009 044 878

## Beschreibung

### Technisches Gebiet

Die vorliegende Erfindung betrifft ein Verfahren und eine Vorrichtung zum Transportieren von mit Flüssigkeit gefüllten Behältern, bevorzugt zum Transportieren von mit einem Getränk befüllten Getränkebehältern, nach dem Oberbegriff der Ansprüche 1 und 8.

### Stand der Technik

Es ist bekannt, mit einer Flüssigkeit gefüllte Behälter, beispielsweise befüllte Getränkebehälter, über Transportsterne, Rundläufermaschinen, Förderbänder, Halteklammern oder andere Fördervorrichtungen in einer Getränkeabfüllanlage zwischen den unterschiedlichen Behandlungsstationen zu transportieren. Dabei ist es bekannt, die befüllten Behälter von der jeweiligen Füllstation zu einem Verschließer zu transportieren, so dass die befüllten Behälter mit einem Verschluss, beispielsweise einem Schraubverschluss, einem Kronkorken, einer Siegelplatine oder einem Aufrollverschluss, verschlossen werden können.

Beim Transportieren von Behältern in einer Getränkeabfüllmaschine und besonders beim Transportieren befüllter Behälter kann es vorkommen, dass das in dem Behälter befindliche Getränk beziehungsweise die in dem Behälter befindliche Flüssigkeit beim Weitertransport oder beim Ändern der Transportrichtung überschwappt und entsprechend die Außenseite der Mündung des Behälters und die Außenseite des jeweiligen Behälters kontaminiert.

Gerade bei großen, labilen Behältern, wie beispielsweise großvolumigen PET-Behältern mit relativ großen Mündungsöffnungen, welche beispielsweise zur Abfüllung von Milch verwendet werden, stellt sich entsprechend das Problem, eine Verschmutzung des äußeren Mündungsbereiches sowie der Außenseite des Behälters zu verhindern. Durch Produktreste im Mündungsbereich kann es nämlich zu Keimbildung zwischen dem Mündungsbereich des Behälters und dem aufgeschraubten Verschluss kommen. Eine Reinigung des entsprechenden Mündungsbereiches ist aber schwierig durchzuführen, da beim Spülen des Mündungsbereiches auch Spülmedium in den Behälter eingetragen werden könnte, was nicht erwünscht ist.

Diese Problematik des Überschwappens von in einem Behälter aufgenommenem Füllgut ist besonders auffällig beispielsweise bei 1 Gallonen-Kanistern für Milch oder für Säfte, welche sehr labil sind und welche gleichzeitig mit einem sehr hohen Flüssigkeitsspiegel beziehungsweise sehr hohen Füllniveau mit dem jeweiligen Produkt befüllt werden.

Um ein Überschwappen beziehungsweise Verschwappen von Füllprodukt aus solchen Behältern zu vermeiden, ist es aus dem Stand der Technik bekannt, die entsprechende Mündung durch das jeweilige Füllorgan abzudichten und eventuell den während der Befüllung entstehenden Schaum abzusaugen, um ein sauberes Füllergebnis zu erreichen.

Beispielsweise aus der US 3,945,174 ist ein Verfahren zum Verschließen von flexiblen Kunststoffbehältern für die Abfüllung von Milch bekannt, wobei die Behälter üblicherweise eine halbe Gallone oder eine ganze Gallone Milch fassen. Um die optisch sichtbare Füllhöhe unabhängig von der jeweiligen Schrumpfung der Behälter beziehungsweise den Behältertoleranzen bereitstellen zu können, schlägt diese Lehre vor, eine Seitenwand des Behältnisses so einzudrücken, dass der Flüssigkeitsspiegel jeweils konstant ist.

Die US 4,338,765 A beschreibt ein Verfahren und eine Vorrichtung nach dem Oberbegriff der Ansprüche 1 und 8. Aus der WO 2011/007370 A1 sind ein Verfahren und eine Einrichtung zum Transportieren von Flaschen bekannt.

### Darstellung der Erfindung

Ausgehend von dem bekannten Stand der Technik ist es eine Aufgabe der vorliegenden Erfindung, ein Verfahren sowie eine Vorrichtung zum Transportieren von mit Flüssigkeit gefüllten Behältern anzugeben, mittels welchem das Füllergebnis weiter verbessert werden kann.

Diese Aufgabe wird durch ein Verfahren zum Transportieren von mit Flüssigkeit gefüllten Behältern mit den Merkmalen des Anspruchs 1 gelöst. Vorteilhafte Weiterbildungen des Verfahrens ergeben sich aus den Unteransprüchen.

Entsprechend umfasst das Verfahren zum Transportieren von mit Flüssigkeit gefüllten Behältern, bevorzugt zum Transportieren von mit Flüssigkeit gefüllten Behältern, welche einen flexiblen Boden aufweisen, die Schritte des Absenkens des Flüssigkeitsspiegels der Flüssigkeit in dem gefüllten Behälter, und des Transportierens des Behälters mit abgesenktem Flüssigkeitsspiegel. Das Absenken des Flüssigkeitsspiegels wird durch eine teilflächige Anlage des Bodens des Behälters auf einer Behälterauflage erreicht.

Dadurch, dass der Flüssigkeitsspiegel der Flüssigkeit in dem gefüllten Behälter zunächst abgesenkt wird, und der Behälter dann mit abgesenktem Flüssigkeitsspiegel transportiert wird, wird die Neigung zum Überschwappen beziehungsweise zum Verschütten der in dem Behälter aufgenommenen Flüssigkeit beim Transport deutlich reduziert. Auf diese Weise wird ein Verschwappen beziehungsweise ein Verschütten der in dem Behälter aufgenommenen Flüssigkeit aus der Mündung verringert beziehungsweise vollständig vermieden, so dass eine aufwändige Außenreinigung des Mündungsbereiches sowie des auf dem Mündungsbereich angeordneten Außengewindes nicht notwendig wird.

So kann das Füllergebnis gegenüber den herkömmlichen Transportvorrichtungen verbessert werden. Weiterhin kann der Transport auch mit erhöhten Geschwindigkeiten durchgeführt werden gegenüber den herkömmlichen Geschwindigkeiten, so dass der Durchsatz in einer Getränkeabfüllanlage gesteigert werden kann.

Darüber hinaus ist eine Abdichtung des Mündungsbereiches mit dem jeweiligen Füllorgan durch das Absenken des Flüssigkeitsspiegels während des Transportes nicht mehr notwendig, so dass die aus hygienischen Gründen favorisierten Freistrahlfüller nun im Zusammenhang mit sehr flexiblen, großvolumigen Getränkebehältern verwendet werden können. Auch auf diese Weise lässt sich das Füllergebnis deutlich gegenüber den vorbekannten Füllverfahren verbessern, da durch den fehlenden Kontakt des Füllorgans mit der Mündung des zu befüllenden Behälters eine Kontaminierung des Mündungsbereiches weiter reduziert beziehungsweise vollkommen ausgeschlossen werden kann.

Bei der Verwendung von Freistrahlfüllorganen kommt es jedoch häufig und produktabhängig zur Bildung von Schaum oder Blasen. Durch die Absenkung des Flüssigkeitsspiegels der Flüssigkeit in dem gefüllten Behälter beim Transport des Behälters kann auch ein Überlaufen der Blasen beziehungsweise des Schaumes vermieden werden, so dass eine Verschmutzung des Mündungsbereiches verringert beziehungsweise vollständig vermieden werden kann.

Zur weitergehenden Behandlung des jeweiligen Behälters wird der Flüssigkeitsspiegel dann bevorzugt wieder angehoben. Eine solche Anhebung des Flüssigkeitsspiegels nach dem Transport des Behälters mit abgesenktem Flüssigkeitsspiegel kann beispielsweise zum Verschließen des jeweiligen Behälters durchgeführt werden. Hierbei ist es besonders bevorzugt, wenn der Flüssigkeitsspiegel für sämtliche Behälter, unabhängig von deren jeweiliger Toleranz, auf das gleiche Füllniveau angehoben wird, so dass die verschlossenen Behälter bis zur gleichen Behälterhöhe gefüllt sind.

Das Transportieren des Behälters mit abgesenktem Flüssigkeitsspiegel umfasst bevorzugt auch einen Richtungswechsel und/oder eine Übergabe von einer ersten Transportvorrichtung zu einer zweiten Transportvorrichtung, beispielsweise von einem ersten Transportstern an einen zweiten Transportstern, oder von einem Drehtisch beziehungsweise Förderband an einen Transportstern. Durch die Absenkung des Flüssigkeitsspiegels der Flüssigkeit in dem mit der Flüssigkeit gefüllten Behälter kann auch bei einem mehr oder minder abrupten Richtungswechsel ein Überschwappen der Flüssigkeit verringert beziehungsweise vermieden werden.

Bevorzugt wird vor dem Absenken des Flüssigkeitsspiegels der Flüssigkeit in dem gefüllten Behälter der Behälter mit einem Sondenfüller bis zu einer vorgegebenen Höhe befüllt. In einer Alternative wird der Behälter vor dem Absenken des Flüssigkeitsspiegels beziehungsweise gleichzeitig mit dem Absenken des Flüssigkeitsspiegels mittels eines volumengesteuerten Freistrahlfüllers befüllt.

Ein Absenken des Flüssigkeitsspiegels bei gleichzeitigem Befüllen des Behälters mit einem Freistrahlfüller kann das bei einem Freistrahlfüller unvermeidbar auftretende Ausbilden von Schaum beziehungsweise von Blasen durch das Absenken des Flüssigkeitsspiegels kompensieren.

In einer bevorzugten Variante des Verfahrens wird das Absenken und/oder das Anheben des Flüssigkeitsspiegels dadurch erreicht, dass der flexible Boden eines Behälters entsprechend verformt wird. Hierbei wird beispielsweise zum Absenken des Flüssigkeitsspiegels ein Ausbeulen des flexiblen Bodens in Richtung der Schwerkraft, also nach unten, erlaubt, beispielsweise dadurch, dass eine Behälterauflage geometrisch entsprechend so ausgebildet ist, dass sie das Ausbeulen des Behälters beziehungsweise des Behälterbodens nach unten nicht verhindert. Mit anderen Worten ist die entsprechende Behälterauflage nicht vollflächig eben ausgebildet, sondern weist ihrerseits Einbuchtungen, Absenkungen oder andere Aufnehmungen auf, derart, dass sich der Behälterboden nach unten ausbeulen kann. Hierzu ist es besonders bevorzugt, die entsprechende Behälterauflage durch Schienen beziehungsweise einen Auflagering, welcher im Wesentlichen dem Durchmesser beziehungsweise den Konturen des befüllten Behälters entspricht, auszubilden, und den zentralen Bereich in einer unterhalb der Auflagefläche angeordneten Ebene auszubilden.

In einer Alternative kann die Behälterauflage auch konkav ausgebildet sein oder irgendeine andere polygonale, elliptische oder in einer sonstigen, nicht planen Weise mit einer Vertiefung ausgebildeten Art ausgebildet sein, um ein Ausbeulen des Bodens des Behälters nach unten zu ermöglichen.

Bevorzugt wird die jeweilige Verformung des Bodens des befüllten Behälters angepasst an den jeweiligen Verfahrenszustand beziehungsweise die jeweilige Bearbeitungsposition innerhalb einer Getränkeabfüllanlage. Beispielsweise kann zu Beginn eines Abfüllvorganges, beispielsweise mit einem Freistrahlfüller, eine Behälterauflage noch vollflächig eben ausgebildet sein, und dann während des Verlaufs und insbesondere zum Ende des Abfüllvorganges hin ein Absenken des Behälterbodens nach unten ermöglichen, beispielsweise dadurch, dass ein zentraler Bereich der vormals vollflächig ausgebildeten ebenen Behälterauflage nach unten ausweicht. In einem späteren Bearbeitungsstadium beziehungsweise an einer späteren Bearbeitungsstation wird während des Transportes des Behälters beispielsweise von einer Füllstation zu einem Verschließer der Flüssigkeitsspiegel in der abgesenkten Position gehalten, dadurch, dass der Bodenbereich entsprechend nach unten ausgelenkt bleibt. Beispielsweise kann während des Transportes des Behälters der Behälter in seinem Bodenbereich lediglich über einen auf den Rand wirkenden Ring, oder über parallel zueinander angeordnete Schienen so geführt werden, dass ein Ausbeulen des Bodens nach unten ermöglicht wird und entsprechend der Flüssigkeitsspiegel abgesenkt wird.

In einer dann nachfolgenden Verschließstation wird der Flüssigkeitsspiegel nach dem Transport dann wieder angehoben, um einen einheitlichen Füllstand der verschlossenen, befüllten Behälter bereitzustellen. Hierdurch kann der ausgebeulte Bodenbereich des Behälters wieder so zurückgeformt werden, dass das in der Mündung vorherrschende Füllniveau einem bestimmten vorgegebenen Niveau entspricht. Hierzu kann die entsprechende Rückformung des Bodens entweder über ein gesteuertes Rückformmittel durchgeführt werden, oder aber es wird die vormals nicht vollflächig ebene Behälterauflage in eine vollflächig ebene Behälterauflage überführt. Dann können die Behälter mit den jeweiligen Verschlüssen versehen werden.

In einer Weiterbildung kann der Boden des Behälters und dadurch auch der Flüssigkeitsspiegel des Behälters dadurch abgesenkt werden, dass der Behälter von einer entsprechenden Behälterauflage teilweise oder vollständig abgehoben wird. Hierzu kann in einem besonders bevorzugten Ausführungsbeispiel der Behälter in seinem Halsbereich gegriffen werden, und, ähnlich dem so genannten "Neck-Handling" bei PET-Flaschen, zu der nächsten Behandlungsstation transportiert werden. Auch auf diese Weise kann ein weitgehend schwappfreies und kontaminationsfreies Transportieren des jeweiligen Behältnisses erreicht werden.

Das vorbeschriebene Verfahren zum Transportieren von mit Flüssigkeit gefüllten Behältern wird bevorzugt mit PE-Behältern mit einem Füllvölumen von mehr als 1,5 l, bevorzugt von mehr als 3 l, besonders bevorzugt einem Füllvolumen von einer halben Gallone oder einer ganzen Gallone durchgeführt.

Die oben beschriebene Aufgabe wird weiterhin durch eine Vorrichtung zum Transportieren von mit Flüssigkeit gefüllten Behältern mit den Merkmalen des Anspruchs 8 gelöst. Bevorzugte Ausführungsbeispiele der Vorrichtung ergeben sich aus den entsprechenden Unteransprüchen.

Entsprechend umfasst die Vorrichtung zum Transportieren von mit Flüssigkeit gefüllten Behältern, bevorzugt in einer Getränkeabfüllanlage, eine Absenkungsvorrichtung zum Absenken des Flüssigkeitsspiegels in dem Behälter, und eine Fördervorrichtung zum Fördern des Behälters mit abgesenktem Flüssigkeitsspiegel.

Durch die Bereitstellung der Absenkungsvorrichtung zum Absenken des Flüssigkeitsspiegels in dem Behälter wird erreicht, dass ein Transport des jeweiligen Behälters ermöglicht wird, ohne dass ein übermäßiges Verschwappen der in dem Behälter aufgenommenen Flüssigkeit auftritt beziehungsweise ein solches Verschwappen beziehungsweise Überlaufen der Flüssigkeit vollständig vermieden werden kann.

Mittels einer Anhebvorrichtung kann der Flüssigkeitsspiegel nach dem Transport beziehungsweise bei der darauffolgenden Behandlungsstation wieder angehoben werden, um eine entsprechende Behandlung des Behälters durchführen zu können. Beispielsweise kann durch das Anheben des Flüssigkeitsspiegels erreicht werden, dass sämtliche verschlossenen Behälter das gleiche Flüssigkeitsniveau aufweisen.

Bevorzugt ist die Absenkvorrichtung und/oder die Anhebvorrichtung so ausgebildet, dass sie unmittelbar auf den flexiblen Boden des jeweiligen Behälters wirkt.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematischen Seitenansicht eines Behälters auf einer Vorrichtung zum Transportieren des Behälters in einer ersten Ausführungsform;
- Figur 2: eine schematische Detailansicht eines Behälters während des Transportes bei einem Richtungswechsel;
- Figur 3: eine schematische Draufsicht auf den Übergabebereich zwischen einem Füllerkarussell und einem Auslaufstern in einer Getränkeabfüllanlage;
- Figur 4: eine schematische Draufsicht auf einen Ausschnitt einer Getränkeabfüllanlage, welche ein Füllerkarussell und einen Verschließer umfasst;
- Figur 5: eine schematische Darstellung einer Anhebvorrichtung zum Anheben des Flüssigkeitsspiegels in einem Behälter; und
- Figur 6: eine schematische Seitendarstellung einer Transportvorrichtung in einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

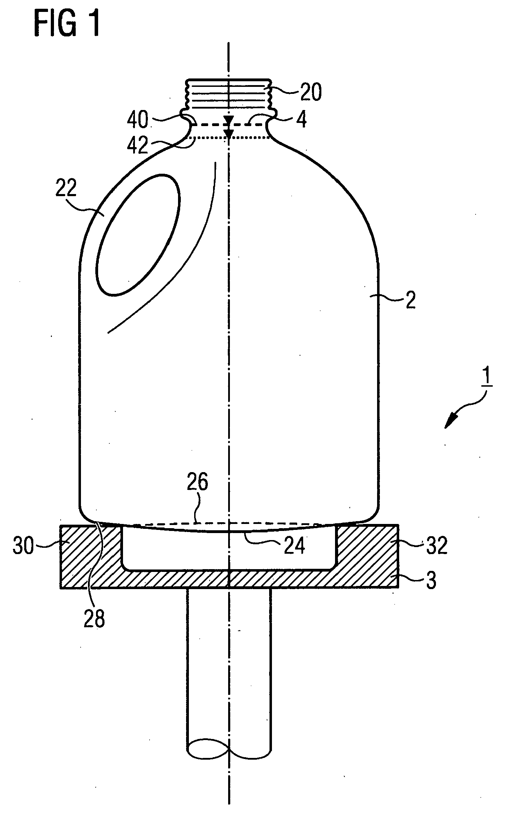

Figur 1 zeigt schematisch eine Transportvorrichtung 1 zum Transportieren eines mit Flüssigkeit gefüllten Behälters 2. Der Behälter 2 ist beispielsweise ein aus einem PE-Material gefertigter Behälter mit einem Füllvolumen von einer Gallone (ca. 3,7 l), welcher eine Mündung 20 mit einem relativ großen Durchmesser, sowie einen Griffbereich 22 aufweist. Das Material des Behälters 2, in dem gezeigten Ausführungsbeispiel bevorzugt ein PE-Material, ist mit so einer geringen Wandstärke ausgeführt, dass der Behälter 2 relativ flexibel ist. Insbesondere ist der Boden 24 des Behälters 2 so flexibel, dass er, wenn er nicht unterstützt wird, nach unten hin auswandert. In Figur 1 ist ein bereits nach unten hin ausgewanderter Boden 24 des Behälters 2 gezeigt, wobei die ursprüngliche Planlage schematisch mit der gestrichelten Linie 26 angedeutet ist.

Die Transportvorrichtung 1 umfasst eine Behälterauflage 3, auf welcher die Behälter 2 transportiert werden. Der Behälter 2 steht auf der Behälterauflage 3 und wird auf dieser durch einen Abschnitt der Getränkeabfüllanlage transportiert. Beispielsweise ist die Behälterauflage 3 unterhalb der Füllventile in einem Füllerkarussell angeordnet.

Durch das Einfüllen der Flüssigkeit in den Behälter 2 durch die Mündung 20 beult sich der Boden 24 des Behälters 2 nach unten hin aus. Die Behälterauflage 3 weist dabei eine Absenkungsvorrichtung auf, welche in dem in Figur 1 gezeigten Ausführungsbeispiel dadurch ausgebildet ist, dass zwei parallel zueinander angeordnete Schienen 30, 32 vorgesehen sind, welche den Behälter 2 am Boden 24 lediglich in dessen Randbereich 28 unterstützen. Entsprechend hängt zumindest der zentrale Bereich des Bodens 24 des Behälters 2 so frei, dass der Boden 24 gegenüber der Planlage 26 nach unten hin ausweichen kann.

Die Absenkungsvorrichtung umfassend die beiden Schienen 30, 32 bewirkt entsprechend, dass ein Flüssigkeitsspiegel 4 in dem Behälter von einem Ausgangsniveau 40, in welchem der Boden 24 in der durch die gestrichelte Linie 26 angedeuteten Planlage war, in auf ein abgesenktes Niveau 42 abgesenkt wird, dadurch, dass der Boden 24 in der Absenkungsvorrichtung, welche die beiden Schienen 30, 32 umfasst, durchhängt.

Durch das Absenken des Flüssigkeitsspiegels 4 von dem Ausgangsniveau 40 auf das abgesenkte Niveau 42 kann erreicht werden, dass bei dem Transport des Behälters 2 auf der Transportvorrichtung 1 die Neigung dazu, dass Flüssigkeit aus der Mündung 20 herausschwappt und entsprechend sowohl den Mündungsbereich als auch den Rest des Behälters 2 kontaminiert, deutlich gegenüber der Ausgangsebene des Flüssigkeitsspiegels reduziert wird.

Die Absenkvorrichtung umfassend die beiden Schienen 30, 32 kann bereits während des Befüllvorganges so vorhanden sein beziehungsweise so betätigt sein, dass die Ausbeulung des Bodens 24 des Behälters 2 automatisch während des Befüllvorganges mit der Flüssigkeit stattfindet. Entsprechend findet die Absenkung des Flüssigkeitsspiegels von dem Ausgangsniveau 40 auf das abgesenkte Niveau 42 kontinuierlich während des Befüllens statt, wobei die eigentliche Absenkung erst nach Abschluss des Befüllvorganges detektierbar ist. Dieser Vorgang bietet sich besonders im Zusammenhang mit einem volumengesteuerten beziehungsweise einem gewichtsgesteuerten Befüllvorgang an, bei welchem ein vorbestimmtes Füllvolumen beziehungsweise ein vorbestimmtes Füllgewicht der Flüssigkeit in dem zu befüllenden Behälter 2 erreicht werden soll.

In einem alternativen, nicht gezeigten Ausführungsbeispiel eignet sich das Transportverfahren sowie die Vorrichtung zum Transport auch in Kombination mit einem Sondenfüller, welcher einen vorbestimmten Flüssigkeitsspiegel in dem Behälter 2 erreichen lässt. Bei Verwendung eines Sondenfüllers ist es jedoch notwendig, dass die Absenkung des Flüssigkeitsspiegels von dem Ausgangsniveau 40 auf das abgesenkte Niveau 42 erst nach Abschluss des Füllvorganges stattfindet, um keine verfälschten Füllstandsmessungen bereitzustellen.

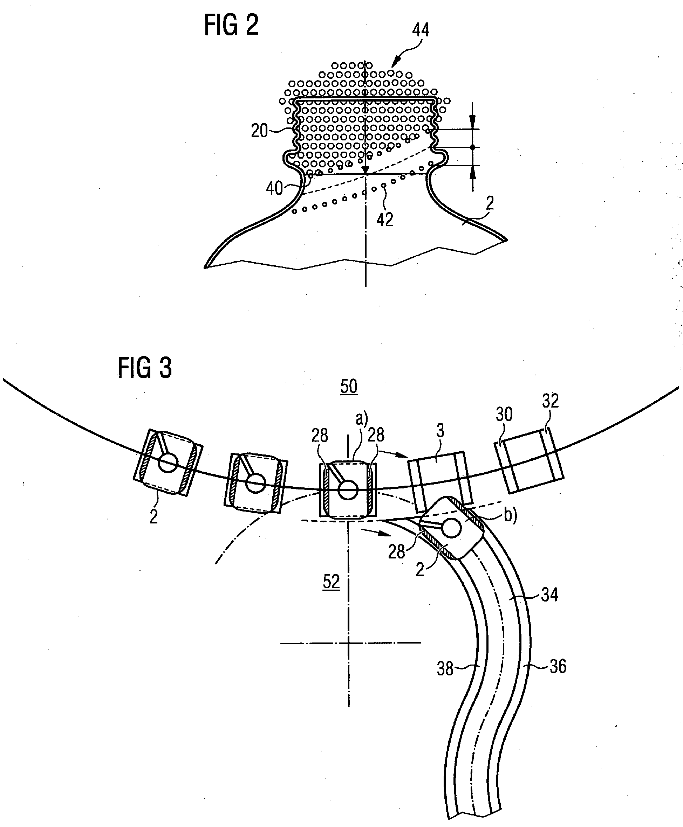

Figur 2 zeigt in einer Detaildarstellung den Behälter 2 mit seinem Mündungsbereich 20, wobei sowohl das Ausgangsniveau 40, als auch das abgesenkte Niveau 42 gezeigt sind. Der Behälter 2 ist in Figur 2 in einem Zustand gezeigt, in welchem er eine Querbeschleunigung erfährt, beispielsweise beim Wechseln der Transportrichtung oder bei einer Kreisführung, so wie sie beispielsweise in einem Rundläuferfüller auftritt. Entsprechend wird die im Behälter 2 angeordnete Flüssigkeit aufgrund der Querbeschleunigung so ausgelenkt, wie es in Figur 2 zu erkennen ist. Ein Überschwappen der Flüssigkeit in dem Behälter 2, sowie des ebenfalls schematisch angedeuteten Schaums 44, kann entsprechend durch das Absenken des Flüssigkeitsspiegels von dem Ausgangsniveau 40 auf das abgesenkte Niveau 42 reduziert werden, beziehungsweise vollständig verhindert werden. Entsprechend kann auch eine Kontaminierung des Außenbereichs der Mündung 20 weitgehend verhindert werden oder gar vollständig vermieden werden, wenn der Flüssigkeitsspiegel von dem Ausgangsniveau 40 auf das abgesenkte Niveau 42 abgesenkt wird.

Die Absenkung des Flüssigkeitsspiegels ergibt eine Volumenerweiterung des Behälters 2 durch das Ausbeulen des Bodens 24 des Behälters 2 nach unten.

Figur 3 zeigt in einer schematischen Draufsicht eine Getränkeabfüllanlage, umfassend ein Füllerkarussell 50, welches eine Mehrzahl von umlaufenden Behälterauflagen 3 aufweist, welche jeweils, so wie in Figur 1 schematisch in Schnittdarstellung gezeigt, mit zwei parallel zueinander angeordneten Schienen 30, 32 versehen sind. Weiterhin ist ein Auslaufstern 52 vorgesehen, mittels welchem die in dem Füllerkarussell 50 befüllten Behälter 2 aus dem Füllerkarussell 50 ausgeschleust werden. Unterhalb des Auslaufsterns 52 ist als weitere Behälterauflage ein entsprechender Überschub 34 vorgesehen, welcher zwei seitlich angeordnete Schienen 36, 38 aufweist. Auf diesen Überschub 34 wird der Behälter 2, so wie beispielsweise bei Position b) gezeigt, so geführt, dass er lediglich in seinem Randbereich 28 auf den Schienen 36, 38 aufliegt. Entsprechend ergibt sich auch hieraus wieder ein Durchhängen des Bodens 24 des Behälters 2 und damit eine Absenkung des Flüssigkeitsniveaus im Behälter 2. Auf diese Weise wird ein Überschwappen auch bei dieser Änderung der Transportrichtung vermieden.

In Position a) ist die Aufnahme des Behälters 2 auf der Behälterauflage 3 noch einmal schematisch so dargestellt, dass der Randbereich 28, welcher auf den parallel zueinander angeordneten Schienen 30, 32 aufliegt, klar zu erkennen ist. Durch das Aufliegen des Randbereiches 28 des Behälters 2 lediglich auf den Schienen 30, 32 und entsprechend kein vollflächiges Aufliegen des Bodens 24 wird eine Absenkung des Flüssigkeitsspiegels in dem in den Figuren 1 und 2 gezeigten Sinne erreicht. Diese Absenkung des Flüssigkeitsspiegels wird auch im Bereich des Auslaufsternes 52 durch die beiden parallel zueinander geführten Schienen 36, 38 aufrechterhalten. Dabei wird beim eigentlichen Herunterschieben des Behälters 2 von der Behälterauflage 3 auf die Schienen 36, 38 des Überschubs 34 die Geometrie so gewählt, dass der durchhängende Bereich des Bodens 24 des Behälters 2 im Wesentlichen in seiner nach unten hängenden Ausformung verbleiben kann und entsprechend auch der Flüssigkeitsspiegel in dem Moment der Richtungsänderung in seinem abgesenkten Zustand verbleibt.

Die Schienen 36, 38 des Überschubs 34 sind in einem ähnlichen beziehungsweise im gleichen Abstand angeordnet, wie die beiden Schienen 30, 32 der Behälterauflage 3. Sie greifen den Behälterboden jedoch ca. um 180° versetzt an.

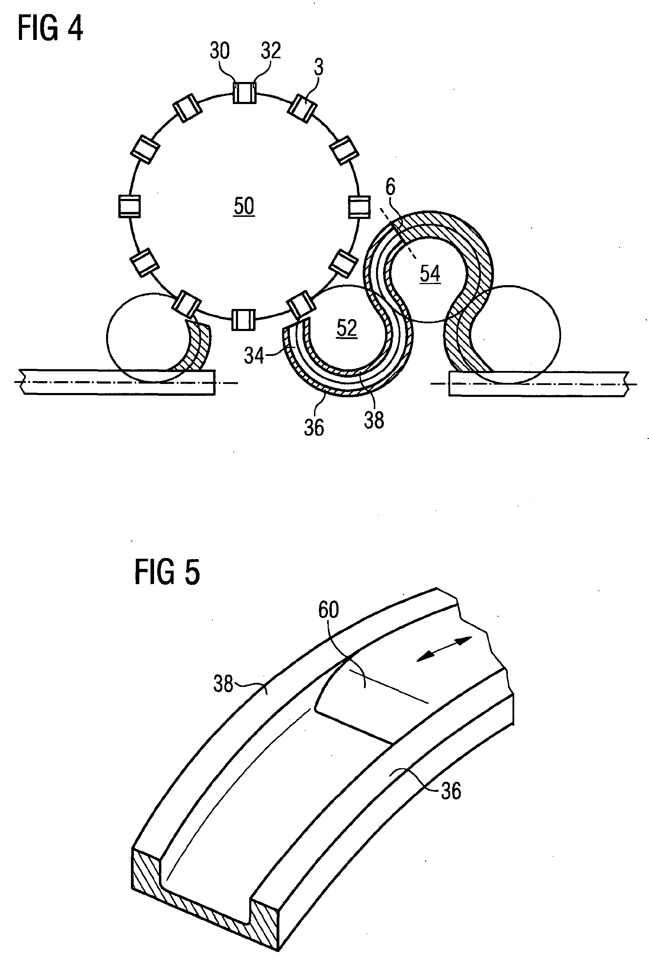

In Figur 4 ist eine weitere exemplarische Darstellung einer Getränkeabfüllanlage gezeigt, wobei wieder ein Füllerkarussell 50 vorgesehen ist, welches zum Befüllen der Behälter mit der entsprechenden Füllflüssigkeit dient, und welches die beispielsweise in den Figuren 1 und 3 bereits gezeigten Behälterauflagen 3 aufweist, welche die seitlichen, parallel zueinander angeordneten Schienen 30, 32 aufweist. Weiterhin ist ein Auslaufstern 52 vorgesehen, welcher die Behälter auf einem Überschub 34 auf entsprechenden Schienen 36, 38 so führt, dass der Flüssigkeitsspiegel nicht erneut angehoben wird, sondern in einem abgesenkten Niveau verbleibt. Ein Verschließer 54 schließt sich an den Auslaufstern 52 an. Im Bereich des Verschließers ist ein Übergangsbereich 6 vorgesehen, welcher eine Anhebvorrichtung 60 zum Anheben des Flüssigkeitsspiegels aufweist.

Die Anhebvorrichtung 60 ist in Figur 5 durch einen verschiebbaren Keil gezeigt, welcher das Niveau des Mittelteils zwischen den beiden Schienen 36, 38 auf ein vollflächiges Niveau anhebt. Mit anderen Worten wird der nach unten hin ausgebeulte Boden 24 eines Behälters 2, so wie er beispielsweise in Figur 1 gezeigt ist, über die beiden Schienen 36, 38 zur Anhebvorrichtung 60 geführt, wo der Boden dann wieder auf ein vollflächiges, ebenes Niveau angehoben wird und entsprechend auch der Flüssigkeitsspiegel in dem Behälter wieder auf den Ausgangswerf angehoben wird.

Durch das Anheben des Flüssigkeitsspiegels kann beim Verschließen des Behälters in dem Verschließer 54 ein höheres Flüssigkeitsniveau innerhalb des Behälters 2 erreicht werden. Weiterhin kann der Keil auch alternativ so ausgebildet sein, dass eine bestimmte Füllhöhe in der Mündung des befüllten Behälters erreicht wird. Dies kann dadurch erreicht werden, dass der Boden selektiv angehoben wird - entweder für ein bestimmtes Batch an Behältern, oder individuell für jeden einzelnen Behälter. Auf diese Weise kann erreicht werden, dass unabhängig von der jeweiligen Ausgestaltung des Batches der Behälter ein konstantes Füllniveau erreicht wird.

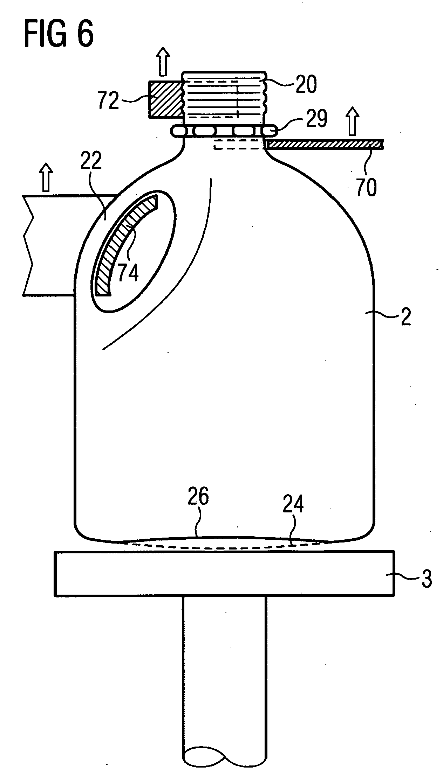

Figur 6 zeigt eine weitere Ausführung einer Absenkvorrichtung, wobei der Behälter 2 wiederum zunächst auf einer Behälterauflage 3 transportiert wird, welche hier vollflächig und plan ausgeführt ist. Der Behälter 2 wird aber zum Absenken des Flüssigkeitsspiegels beispielsweise an einem Halsring 29, im Mündungsbereich 20 und/oder im Griffbereich 22 über entsprechende Hubvorrichtungen 70, 72 oder 74 angehoben. Die Hubvorrichtung 70, welche unter dem Halsring 20 angreift, die Hubvorrichtung 72, welche in das Gewinde im Mündungsbereich 20 des Behälters 2 angreift, und/oder die Hubvorrichtung 74, welche im Griffbereich 22 des Behälters 2 eingreift, können entweder gemeinsam oder in beliebigen Kombinationen vorgesehen sein. Wesentlich ist, dass der labile Behälter 2, beispielsweise ein PE-Behälter mit einem Inhalt von beispielsweise einer Gallone, so angehoben wird, dass dessen Boden 24 in die in Figur 6 gestrichelt gezeigte ausgebeulte Form gebracht wird, derart, dass das Füllniveau beziehungsweise der Flüssigkeitsspiegel in der Mündung absinkt. Ein nachfolgendes Anheben des Flüssigkeitsspiegels kann dadurch erreicht werden, dass der Behälter 2 wieder auf einer planen Behälterauflage 3 abgesetzt wird.

### Bezuaszeichenliste

- 1: Transportvorrichtung
- 2: Behälter
- 20: Mündung
- 22: Griffbereich
- 24: ausgebeulter Boden
- 26: planer Boden
- 28: Randbereich
- 3: Behälterauflage
- 30: Schiene
- 32: Schiene
- 34: Überschub
- 36: Schiene
- 38: Schiene
- 4: Flüssigkeitsspiegel
- 40: Ausgangsniveau
- 42: abgesenktes Niveau
- 44: Schaum
- 50: Füllerkarussell
- 52: Auslaufstern
- 54: Verschließer
- 6: Übergangsbereich
- 60: Anhebvorrichtung
- 70: Hubvorrichtung
- 72: Hubvorrichtung
- 74: Hubvorrichtung

## Patentansprüche

1. Verfahren zum Transportieren von mit Flüssigkeit gefüllten Behältern (2), die einen flexiblen Boden (24) aufweisen, umfassend die Schritte:
- Absenken des Flüssigkeitsspiegels (4) der Flüssigkeit in dem mit Flüssigkeit gefüllten Behälter (2), und
- Transportieren des Behälters (2) mit abgesenktem Flüssigkeitsspiegel (42)
**dadurch gekennzeichnet, dass**
das Absenken des Flüssigkeitsspiegels (4) durch eine teilflächige Anlage des Bodens (24) des Behälters (2) auf einer Behälterauflage (3)
erreicht wird.

2. Verfahren gemäß Anspruch 1, **dadurch gekennzeichnet, dass** nach dem Transport der Flüssigkeitsspiegel (4) zur weiteren Behandlung des Behälters (2) wieder angehoben wird, bevorzugt der Flüssigkeitsspiegel (4) zum Verschließen des Behälters (2) auf ein einheitliches Niveau angehoben wird.

3. Verfahren gemäß Anspruch 1 oder 2, **dadurch gekennzeichnet, dass** das Transportieren des Behälters (2) einen Richtungswechsel und/oder die Übergabe von einer ersten Transportvorrichtung (50) an eine zweite Transportvorrichtung (52) umfasst.

4. Verfahren gemäß einem der vorstehenden Ansprüche, **dadurch gekennzeichnet, dass** der Flüssigkeitsspiegel (4) auf eine vorgegebene Höhe angehoben wird, und der Behälter (2) dann verschlossen wird.

5. Verfahren gemäß einem der vorstehenden Ansprüche, **dadurch gekennzeichnet, dass** vor und/oder während des Füllens des Behälters (2) mit einer Flüssigkeit der Flüssigkeitsspiegel (4) abgesenkt wird.

6. Verfahren gemäß einem der vorstehenden Ansprüche, **dadurch gekennzeichnet, dass** das Absenken und/oder Anheben des Flüssigkeitsspiegels (4) durch eine Verformung eines flexiblen Bodens (24) des Behälters (2) erreicht wird.

7. Verfahren gemäß einem der vorstehenden Ansprüche, **dadurch gekennzeichnet, dass** PE-Behälter mit einem Füllvolumen von größer 1,5 I, bevorzugt größer 3 l, besonders bevorzugt von einer halben oder einer ganzen Gallone transportiert werden.

8. Vorrichtung (1) zum Transportieren von mit Flüssigkeit gefüllten Behältern (2), die einen flexiblen Boden (24) aufweisen, bevorzugt in einer Getränkeabfüllanlage, umfassend
- eine Absenkvorrichtung (30, 32, 34, 36) zum Absenken des Flüssigkeitsspiegels (4) in dem Behälter (2), und
- eine Fördervorrichtung (50, 52) zum Fördern des Behälters (2) mit abgesenktem Flüssigkeitsspiegel (4)
**dadurch gekennzeichnet, dass**
die Absenkvorrichtung in Form einer teilflächig ausgebildeten Behälterauflage (30, 32, 36, 38) ausgebildet ist, so dass das Absenken des Flüssigkeitsspiegels (4) durch eine teilflächige Anlage des Bodens (24) des Behälters (2) auf der Behälterauflage (3) erreicht wird.

9. Vorrichtung (1) gemäß Anspruch 8, **dadurch gekennzeichnet, dass** nach der Fördervorrichtung (50, 52) eine Anhebvorrichtung (60) zum Anheben des Flüssigkeitsspiegels (40) angeordnet ist.

## Claims

1. Method for transporting containers (2) filled with fluid, which have a flexible base (24), the method comprising the following steps:
- lowering the fluid level (4) of the fluid in the container (2) filled with fluid; and
- transporting the container (2) with the lowered fluid level (42);
**characterized in that**
lowering of the fluid level (4) is achieved by a partial surface contact of the base (24) of the container (2) to a container support (3).

2. Method according to Claim 1, **characterized in that** after transporting the fluid level (4) for further treatment of the container (2) is raised again, preferably the fluid level (4) for closing the container (2) is raised to a uniform level.

3. Method according to Claim 1 or 2, **characterized in that** transporting of the container (2) comprises a change in direction and/or the transfer from a first transport device (50) to a second transport device (52).

4. Method according to one of the preceding claims, **characterized in that** the fluid level (4) is raised to a predefined level, and then the container (2) is closed.

5. Method according to one of the preceding claims, **characterized in that** the fluid level (4) is lowered prior to and/or during filling of the container (2) with a fluid.

6. Method according to one of the preceding claims, **characterized in that** lowering and/or raising of the fluid level (4) is achieved by a deformation of a flexible base (24) of the container (2).

7. Method according to one of the preceding claims, **characterized in that** PE containers having a filling volume of more than 1.5 1, preferably of more than 3 1, particularly preferably of half or a full gallon, are transported.

8. Device (1) for transporting containers (2) filled with fluid, which have a flexible base (24), preferably in a beverage filling plant, the device comprising:
- a lowering device (30, 32, 34, 36) for lowering the fluid level (4) in the container (2); and
- a conveying device (50, 52) for conveying the container (2) having a lowered fluid level (4);
**characterized in that**
the lowering device is configured in the form of a partial surface formed container support (30, 32, 36, 38) configured , such that lowering of the fluid level (4) is achieved by a partial surface contact of the base (24) of the container (2) to the container support (3).

9. Device (1) according to Claim 8, **characterized in that** a raising device (60) for raising the fluid level (40) is disposed downstream of the conveying device (50, 52).

## Revendications

1. Procédé pour transporter des récipients (2) remplis de liquide qui présentent un fond flexible (24), comprenant les étapes:
- abaisser du niveau de liquide (4) du liquide dans le récipient (2) rempli de liquide, et
- transporter du récipient (2) avec le niveau de liquide abaissé (42),
**caractérisé en ce que**
l'abaissement du niveau de liquide (4) s'effectue par un appui, sur une partie de la surface, du fond (24) du récipient (2) sur un support de récipient (3).

2. Procédé selon la revendication 1, **caractérisé en ce qu'**après le transport, le niveau de liquide (4) est à nouveau augmenté en vue d'un traitement ultérieur du récipient (2), de préférence le niveau de liquide (4) est augmenté à un niveau unitaire pour fermer le récipient (2).

3. Procédé selon la revendication 1 ou 2, **caractérisé en ce que** le transport du récipient (2) comprend un changement de direction et/ou le passage d'un premier dispositif de transport (50) à un deuxième dispositif de transport (52).

4. Procédé selon l'une quelconque des revendications précédentes, **caractérisé en ce que** le niveau de liquide (4) est augmenté à une hauteur prédéterminée et le récipient (2) est ensuite fermé.

5. Procédé selon l'une quelconque des revendications précédentes, **caractérisé en ce qu'**avant et/ou pendant le remplissage du récipient (2) avec un liquide, le niveau de liquide (4) est abaissé.

6. Procédé selon l'une quelconque des revendications précédentes, **caractérisé en ce que** l'abaissement et/ou l'augmentation du niveau de liquide (4) est/sont réalisé(e)(s) par une déformation d'un fond flexible (24) du récipient (2).

7. Procédé selon l'une quelconque des revendications précédentes, **caractérisé en ce que** des récipients en PE avec un volume de remplissage supérieur à 1,5 1, de préférence supérieur à 3 1, particulièrement préférablement d'un demi-gallon ou d'un gallon, sont transportés.

8. Dispositif (1) pour transporter des récipients (2) remplis de liquide qui présentent un fond flexible (24), de préférence dans une installation de remplissage pour boissons, comprenant
- un dispositif d'abaissement (30, 32, 34, 36) pour abaisser le niveau de liquide (4) dans le récipient (2), et
- un dispositif de transport (50, 52) pour transporter le récipient (2) avec le niveau de liquide abaissé (4),
**caractérisé en ce que**
le dispositif d'abaissement est réalisé sous la forme d'un support de récipient (30, 32, 36, 38) réalisé avec une surface partielle, de telle sorte que l'abaissement du niveau de liquide (4) soit effectué par un appui, sur une partie de la surface, du fond (24) du récipient (2) sur le support de récipient (3).

9. Dispositif (1) selon la revendication 8, **caractérisé en ce qu'**après le dispositif de transport (50, 52) est disposé un dispositif de soulèvement (60) pour augmenter le niveau de liquide (40).
